# EUROPÄISCHE PATENTANMELDUNG

(11) **EP 1 148 655 A1**
(43) Veröffentlichungstag der Anmeldung: **24.10.2001**
(21) Anmeldenummer: 00108562.0
(22) Anmeldetag: 19.04.2000
(51) Int. Cl.: H04B 1/40, H04B 1/48, H04B 1/52

(54) **Sende- und Empfangseinheit**

(71) Anmelder: Infineon Technologies AG, 81541 München (DE)
(72) Erfinder: Zdravko, Boos, 81827 München (DE)
(74) Vertreter: Fischer, Volker, Dipl.-Ing.

(57) **Zusammenfassung**

Es ist eine Sende- und Empfangseinheit angegeben, welche sowohl das Frequenzduplex-Verfahren FDD, als auch das Zeitduplex-Verfahren TDD sowie den Betrieb mit Frequenzduplex FDD mit variabler Duplexfrequenz ermöglicht. Einer Frequenzweiche (DUP), welche an eine Antenne (ANT) angeschlossen werden kann, ist hierzu ein Umschalter (SW) nachgeschaltet. Dabei ist die Anzahl der Filter sowie der Hochfrequenz-Schalter gering. Durch Auftrennen der Empfangspfade für FDD und TDD sind die Empfänger bezüglich Rauschen und Verzerrungen verbessert. Die beschriebene Anordnung kann beispielsweise in UMTS-Transceivern eingesetzt werden und ermöglicht eine asymmetrische Datenübertragung, bei der zwei Sendekanäle mit einem Empfangskanal kombiniert werden können. Die Sende- und Empfangseinheit ist bei geringem Flächenbedarf in einfacher Weise hochintegrierbar.

## Beschreibung

Die Erfindung betrifft eine Sende- und Empfangseinheit (Transceiver).

Das heute weitverbreitete Mobilfunksystem GSM, Global System for Mobile Communication, wird aus technologischen und ökonomischen Gründen von einem Mobilfunksystem der dritten Generation abgelöst werden. Dieses System ist in Europa unter dem Namen UMTS, Universal Mobile Telecommunications System, und international als IMT-2000, International Mobile Telecommunication System 2000, bekannt. UMTS bzw. IMT-2000 soll eine weitaus höhere Datenübertragungskapazität als GSM ermöglichen.

Ein System, welches in der Lage ist, gleichzeitig zu senden und zu empfangen, wird als Vollduplex-System bezeichnet. Es wird auch dann von vollduplexfähigen Systemen gesprochen, wenn Senden und Empfangen nicht gleichzeitig erfolgen, das Umschalten zwischen den beiden Phasen aber vom Teilnehmer unbemerkt geschieht. Man unterscheidet zwei grundlegende Duplexverfahren: Frequenzduplex (Frequency Division Duplex, FDD), bei dem Senden und Empfangen in verschiedenen entsprechend getrennten Frequenzbändern erfolgen, und Zeitduplex (Time Division Duplex, TDD), bei dem die beiden Richtungen in verschiedenen Zeitlagen getrennt werden. Ein Senden von einer Mobilstation zu einer Basisstation wird als Uplink, ein Empfangen der Mobilstation als Downlink bezeichnet.

Bei TDD sind Sende- und Empfangsfrequenzen gleich. Bei FDD mit fester Duplexfrequenz ist bei UMTS eine Duplexfrequenz von 190 Megahertz vorgesehen. Schließlich wird bei UMTS ein FDD mit variabler Duplexfrequenz eingeführt, welche zwischen 134,8 und 245,2 Megahertz liegen kann. Als Duplexfrequenz wird hierbei der Frequenzabstand von Sende- und Empfangsfrequenz bezeichnet. TDD ist bei UMTS in zwei Frequenzbändern vorgesehen, von 1900 bis 1920 Megahertz und von 2010 bis 2025 Megahertz. FDD-Übertragung mit festem Duplexabstand von 190 Megahertz ist in einem Sendeband von 1920 bis 1980 Megahertz und einem Empfangsband von 2110 bis 2170 Megahertz vorgesehen.

Die Datenübertragung mit FDD-variabler Frequenz wird eingeführt, um bei asymmetrischer Datenübertragung mehr Flexibilität zu haben. Es können beispielsweise zwei Downlink-Kanäle mit einem Uplink-Kanal kombiniert werden. Hierdurch wird ein Kanal im FDD-Sendeband frei, denn bei FDD wird üblicherweise je ein Sende- mit je einem Empfangskanal zu einem Kanalpaar fest zugeordnet. Dieser freiwerdende Kanal im FDD-Sendeband kann nun für TDD-Übertragung benutzt werden. Diese Kombination von zwei Downlink- mit einem Uplink-Kanal ist jedoch nur dann möglich, wenn FDD mit variabler Duplexfrequenz zur Verfügung steht.

Die Kombination von zwei Downlink-Kanälen mit einem Uplink-Kanal ist deshalb sinnvoll und wünschenswert, da bei den für UMTS vorgesehenen mobilen Internetdiensten die erwartete Datenmenge zur Mobilstation größer als die von Mobilstation zu Feststation sein kann.

Aufgabe der vorliegenden Erfindung ist es, eine Sende- und Empfangseinheit anzugeben, welche für alle drei Duplexverfahren FDD, TDD und FDD mit variablem Frequenzabstand geeignet ist, und welche zudem hochintegrierbar ist.

Erfindungsgemäß wird die Aufgabe mit einer Sende- und Empfangseinheit gelöst mit
- einer Frequenzweiche, an die ein Zwischenpfad und ein erster Empfangspfad angeschlossen sind,
- einem Schalter, der an den Zwischenpfad angeschlossen ist und mit dem der Zwischenpfad zwischen einem Sendepfad und einem zweiten Empfangspfad umschaltbar ist,
- einem ersten Verstärker, der an den ersten Empfangspfad angeschlossen ist, und
- einem zweiten Verstärker, der an den zweiten Empfangspfad angeschlossen ist.

Die Anordnung weist eine Frequenzweiche auf, an der eine Sende- und Empfangsantenne anschließbar sein kann. Die Frequenzweiche kann bei Frequenzduplex-Betrieb zwischen Sende- und Empfangsband trennen. An die Frequenzweiche ist über einen Zwischenpfad ein Schalter angeschlossen, der bezüglich eines Zeitduplex-Betriebes zwischen Sende- und Empfangs-Zeitschlitzen umschalten kann. An die Frequenzweiche ist über einen ersten Empfangspfad ein erster Verstärker angeschlossen, welcher regelbar ausgeführt sein kann. An den Schalter ist ein zweiter Empfangspfad angeschlossen, an den ein zweiter Verstärker angeschlossen ist, welcher ebenfalls regelbar sein kann.

Die beschriebene Anordnung ermöglicht eine hochintegrierbare Filterlösung, welche für Zeitduplex-Betrieb, Frequenzduplex-Betrieb mit festem Duplexabstand sowie für Frequenzduplex-Betrieb mit variablem Frequenzabstand geeignet ist. Die beschriebene Anordnung weist den Vorteil auf, daß die Zahl der benötigten Filter sowie die Zahl der benötigten Hochfrequenz-Schalter gering ist. Die Anordnung von Schalter und Frequenzweiche hat den Vorteil, daß harmonische Störungen, die vom Schalter, welcher nicht ideal ist, eingebracht werden, von der Frequenzweiche herausgefiltert werden.

Die Anordnung von zwei Verstärkern, welche jeweils Empfangsverstärker sind, und welche regelbar ausgeführt sein können, hat den Vorteil, daß diese wenig Chipfläche auf einem integrierten Schaltkreis benötigen und daß sie leicht integrierbar sind. Jeder Verstärker kann bezüglich eines minimalen Rauschanteils angepaßt werden, da die für TDD beziehungsweise FDD genutzten Frequenzbänder getrennt verstärkt werden. Weiterhin kann jeder Verstärker einzeln bezüglich minimaler Verzerrungen angepaßt werden, wobei zu beachten ist, daß die Linearitätsanforderungen im UMTS-Standard bezüglich TDD und FDD verschieden sind.

In einer vorteilhaften Ausführungsform der vorliegenden Erfindung ist an die Frequenzweiche eine Antenne angeschlossen. Diese Antenne kann eine Sende- und Empfangsantenne sein. Weiterhin kann diese Antenne unmittelbar an die Frequenzweiche angeschlossen sein, das heißt ohne zwischengeschalteten Hochfrequenzschalter.

In einer weiteren, vorteilhaften Ausführungsform der vorliegenden Erfindung ist die Sende- und Empfangseinheit ein UMTS-Transceiver. Die von UMTS geforderte Unterstützung von Zeitduplex, Frequenzduplex und Frequenzduplex mit variabler Frequenz werden von der beschriebenen Sende- und Empfangseinheit unterstützt.

In einer weiteren, vorteilhaften Ausführungsform der vorliegenden Erfindung ist an den Sendepfad ein Leistungsverstärker (Power Amplifier) angeschlossen. Dieser Leistungsverstärker kann ein Verstärker mit regelbarer Ausgangsleistung sein. Der Leistungsverstärker kann so ausgeführt sein, daß sowohl für Frequenzduplex- als auch für Zeitduplex-Betrieb lediglich ein Leistungsverstärker erforderlich ist.

In einer weiteren, vorteilhaften Ausführungsform der vorliegenden Erfindung weist die Frequenzweiche ein Sendefilter und ein Empfangsfilter auf, wobei der Durchlaßbereich des Sendefilters die Bänder des Zeitduplex-Betriebes sowie des Frequenzduplex-Sendebetriebes, und das Empfangsfilter den Frequenzbereich des FDD-Empfangsbandes als Durchlaßbereich hat. Das Sendefilter ist gegenüber einem herkömmlichen Duplex-Filter dahingehend erweitert, daß sein Durchlaßbereich neben dem FDD-Uplink-Band auch die TDD-Bänder umfaßt.

In einer weiteren, vorteilhaften Ausführungsform der vorliegenden Erfindung hat das Sendefilter einen Durchlaß-Bereich zwischen 1900 und 2025 Megahertz, und das Empfangsfilter einen Durchlaß-Bereich von 2110 bis 2170 Megahertz. Das Sendefilter umfaßt somit die beiden TDD-Bänder sowie das FDD-Sendeband des UMTS-Standards, und das Empfangsfilter umfaßt das FDD-Empfangsband. Da im TDD-Betrieb sowohl Senden als auch Empfangen möglich ist, wird die diesbezügliche Trennung in dem der Frequenzweiche nachgeschalteten Schalter durchgeführt. Als Frequenzweiche kann ein Duplexer-Filter Verwendung finden, dessen Durchlaßbereich im Sendefilter von 1920 bis 1980 Megahertz für FDD-Senden auf 1900 bis 2025 Megahertz für FDD-Senden und TDD erweitert ist.

In einer weiteren, vorteilhaften Ausführungsform der vorliegenden Erfindung sind der erste und der zweite Verstärker rauscharme Vorverstärker (Low Noise Amplifier, LNA). Solche LNA, deren Verstärkung regelbar sein kann, können zusätzliche Hochfrequenz-Schalter in den beiden Empfangszweigen erübrigen. Hierdurch kann Chipfläche eingespart sowie die Integration in einem integrierten Schaltkreis vereinfacht sein.

Weitere Einzelheiten der Erfindung sind in den Unteransprüchen angegeben.

Die Erfindung wird nachfolgend an zwei Ausführungsbeispielen anhand der Zeichnungen näher erläutert. Es zeigen:
- Figur 1: ein erstes Ausführungsbeispiel der vorliegenden Erfindung anhand eines Blockschaltbildes,
- Figur 2: die Durchlaßcharakteristiken der Frequenzweiche,
- Figur 3: ein zweites Ausführungsbeispiel der vorliegenden Erfindung,
- Figur 4a: die Durchlaßcharakteristik des ersten Bandpaßfilters von Figur 3, und
- Figur 4b: die Durchlaßcharakteristik des zweiten Bandpaßfilters gemäß Figur 3.

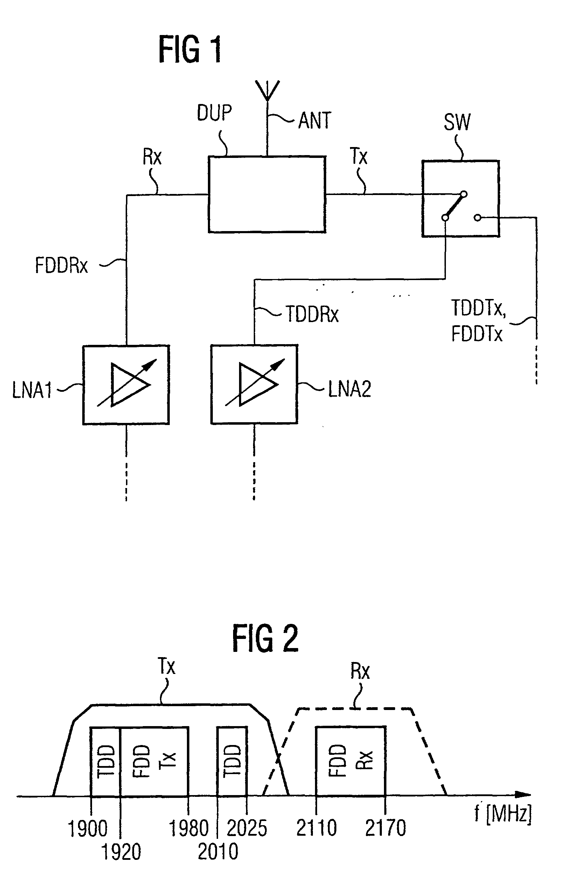

Figur 1 zeigt eine Frequenzweiche DUP, welche als Duplexer-Filter ausgeführt ist, und an die eine Sende- und Empfangsantenne ANT angeschlossen ist. Weiterhin ist an die Frequenzweiche ein erster Empfangspfad Rx sowie ein Zwischenpfad Tx angeschlossen. An den Zwischenpfad Tx ist ein Umschalter SW angeschlossen. Dieser schaltet entweder einen Sendepfad auf den Zwischenpfad Tx, oder den Zwischenpfad Tx auf einen zweiten Empfangspfad durch. An den ersten und den zweiten Empfangspfad ist jeweils ein rauscharmer Vorverstärker LNA1, LNA2 angeschlossen.

Die Frequenzweiche DUP trennt zunächst das FDD-Sendeband vom FDD-Empfangsband. Das sendeseitige Filter der Frequenzweiche ist jedoch dahingehend erweitert, daß die für das Zeitduplex-Verfahren benutzten Bänder ebenfalls in den sendeseitigen Durchlaßbereich der Frequenzweiche fallen. Da im Zeitduplex-Betrieb in entsprechenden Zeitschlitzen gesendet beziehungsweise empfangen wird, ist dem Zwischenpfad Tx der Schalter SW nachgeschaltet, der den TDD-Empfang einem zweiten rauscharmen Verstärker, welcher ein Empfangsverstärker ist, zuführt. Da es sich bei dem vorliegenden Ausführungsbeispiel um einen UMTS-Transceiver handelt, umfaßt der Durchlaßbereich des Sendefilters des Duplex-Filters den Frequenzbereich von 1900 bis 2025 Megahertz. Dies ist in Figur 2 dargestellt. Der Durchlaßbereich des Empfangsfilters im Duplex-Filter umfaßt den Frequenzbereich von 2110 bis 2170 Megahertz.

Die beschriebene Schaltungsanordnung ermöglicht den Betrieb sowohl im Zeitduplex-Betrieb, als auch den Frequenzduplex-Betrieb mit festem oder variablem Duplexabstand. Die beiden rauscharmen Empfangsverstärker LNA1, LNA2, von denen der erste Empfangsverstärker LNA1 für FDD-, und der zweite Empfangsverstärker LNA2 für TDD-Betrieb angepaßt ist, können bezüglich Frequenzbereich, Rauschen und Verzerrung an die jeweiligen Anforderungen unabhängig voneinander angepaßt werden. Da hierbei getrennt regelbare Empfangsverstärker LNA1, LNA2 eingesetzt werden können, können die Empfangsverstärker auch das Umschalten zwischen FDD und TDD ohne die Verwendung zusätzlicher Hochfrequenz-Schalter gewährleisten.

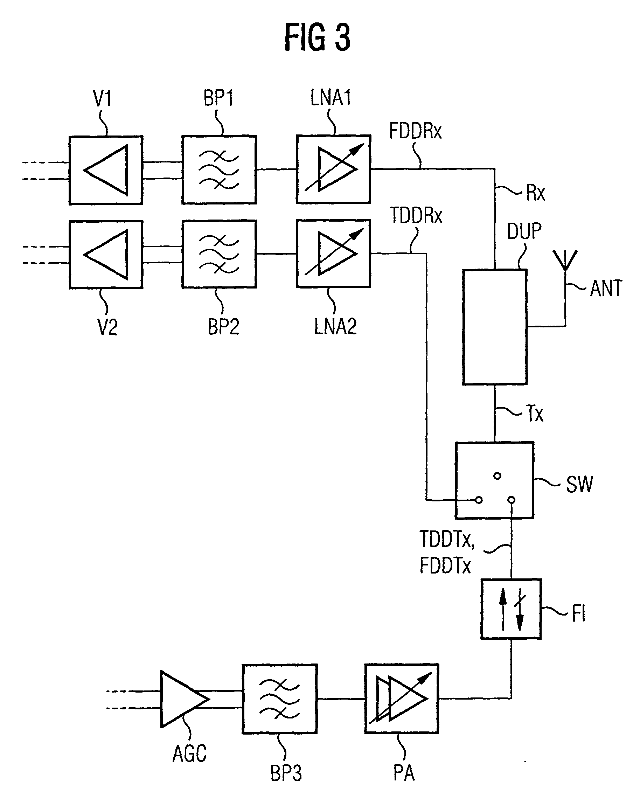

Figur 3 zeigt eine erweiterte Sende- und Empfangseinheit gemäß Figur 1, anhand derer das vorliegende UMTS-Filterkonzept mit zusätzlichen Bandpaßfiltern und deren Filtercharakteristiken näher erläutert wird. Das Blockschaltbild gemäß Figur 1 ist in Figur 3 dahingehend erweitert, daß den beiden rauscharmen Vorverstärkern LNA1, LNA2 je ein Bandpaßfilter nachgeschaltet ist. Das erste Bandpaßfilter BP1 ist dabei bezüglich seines Frequenzbereichs an den Frequenzduplex-Empfang FDDRx angepaßt. Gemäß des im UMTS-Standard festgelegten FDD-Downlink-Frequenzbandes, welches von 2110 bis 2170 Megahertz reicht, weist das erste Bandpaßfilter BP1 einen an dieses Frequenzband angepaßten Durchlaßbereich auf, während die übrigen Frequenzen unterdrückt beziehungsweise stark gedämpft werden. Das zweite Bandpaßfilter BP2, welches dem zweiten rauscharmen Verstärker LNA2 nachgeschaltet ist, befindet sich im Zeitduplexempfangszweig TDDRx des UMTS-Transceivers. Dem Zeitduplex-Verfahren sind gemäß UMTS-Spezifikation zwei Frequenzbänder zugewiesen, von denen eines von 1900 bis 1920 und ein anderes von 2010 bis 2025 Megahertz reicht. Das Bandpaßfilter BP2 weist dementsprechend einen Durchlaßbereich auf, welcher beide TDD-Bänder sowie das dazwischenliegende FDD-Sendeband umfaßt, da im FDD-Betrieb mit variablem Duplexabstand im FDD-Sendeband ein Empfangen und Senden im Rahmen eines TDD-Betriebes bei asymmetrischer Datenübertragung erfolgen kann.

Wenn der Empfangszweig als Superheterodyn-Emfänger ausgeführt ist, das heißt mit einer von Null verschiedenen Zwischenfrequenz, ist das zweite Bandpaßfilter BP2 als Spiegelfrequenzfilter sowie zur Filterung unerwünschter Seitenbänder, welche in einem Superheterodyn-Sender entstehen können, unabdingbar. Wird der Empfänger jedoch für eine Zwischenfrequenz von 0 Megahertz ausgelegt, kann das zweite Bandpaßfilter BP2 entfallen, da in diesem Fall keine Spiegelfrequenz vorkommt und bei TDD-Senden keine unerwünschten Seitenbänder entstehen.

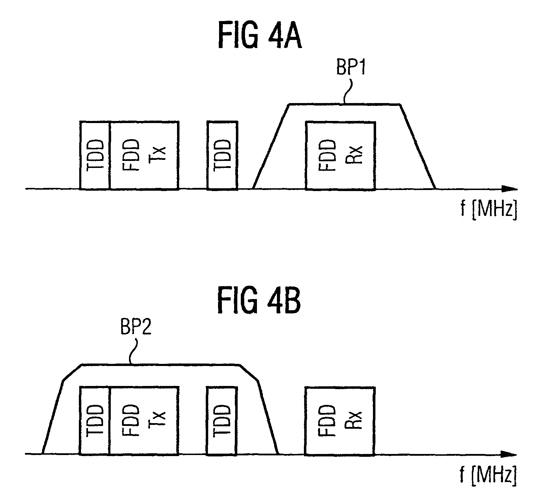

Die Durchlaß-Charakteristiken des ersten Bandpaßfilters BP1 und des zweiten Bandpaßfilters BP2 sind in Figur 4a beziehungsweise Figur 4b zusammen mit den Empfangs- und Sendebändern gemäß UMTS-Spezifikation dargestellt. Dem ersten und zweiten Bandpaßfilter BP1, BP2 können Verstärkerstufen V1, V2 nachgeschaltet sein, an die beispielsweise eine Zwischenfrequenz-Umsetzung und anschließende Zuführung der Empfangssignale an einen Basisband-Baustein angeschlossen sein kann. An den Schalter SW ist gemäß Figur 3 der für Zeitduplex- und Frequenzduplex-Betrieb gemeinsame Sendepfad FDDTx, TDDTx angeschlossen. Weiterhin ist ein Richtungsfilter FI vorgesehen, welches an den Sendepfad angeschlossen ist. An dieses Richtungsfilter FI wiederum ist ein regelbarer Leistungsverstärker PA (Power Amplifier) angeschlossen, dem ein drittes Bandpaßfilter BP3 vorgeschaltet ist. Das dritte Bandpaßfilter BP3 weist eine Mittenfrequenz von 1950 Megahertz auf. Gemäß UMTS-Spezifikation müssen Bandpaßfilter BP3 und Leistungsverstärker PA einen Durchlaß- beziehungsweise Verstärkungsbereich haben, welcher von 1900 bis 2025 Megahertz reicht. Somit sind die beiden Zeitduplex-Frequenzbänder sowie das Uplink-Frequenzduplex-Band abgedeckt. Dem dritten Bandpaßfilter BP3 kann ein Regelverstärker AGC (Automatic Gain Control) vorgeschaltet sein. Die diesem Regelverstärker zuführbaren Signale können beispielsweise aus einer Zwischenfrequenz mit einem Mischer auf die jeweils erforderliche Sendefrequenz hochgemischt werden.

Die Schaltungsanordnung eines UMTS-Transceivers gemäß Figur 3 unterstützt die laut UMTS spezifizierten Duplexverfahren FDD, TDD und FDD mit variablem Frequenzabstand. Die Anzahl der benötigten Filter ist gering, ebenso die Anzahl der benötigten Hochfrequenz-Schalter. Zwischen Frequenzweiche beziehungsweise Duplexerfilter DUP und Antenne ANT ist kein Schalter angeordnet, so daß die vom Schalter SW erzeugten harmonischen Verzerrungen mit dem Duplexerfilter aus den Nutzsignalen herausgefiltert werden können. Die beschriebene Auftrennung von FDD- und TDD-Empfangspfad bereits im Duplexer-Filter ermöglicht die Verwendung zweier, an die jeweiligen Anforderungen angepaßten rauscharmen Empfangsverstärkern LNA1, LNA2, welche in einer integrierten Schaltung einen geringen Chipflächen-Bedarf haben und leicht integrierbar sind. Hierdurch können die rauscharmen Verstärker LNA1, LNA2 bezüglich Rauschen und Linearitätsanforderungen beziehungsweise Verzerrung unabhängig voneinander angepaßt werden. Außerdem kann mit den regelbaren rauscharmen Verstärkern LNA1, LNA2 das Umschalten zwischen Frequenzduplex- und Zeitduplex-Betrieb geleistet werden.

Die beschriebene Schaltungsanordnung gemäß Figur 3 ermöglicht eine asymmetrische Datenübertragung, wodurch zum einen die Auslastung der Mobilfunk-Kanäle erhöht und zugleich die einer Mobilfunkeinheit zur Verfügung stehende Downlink-Bandbreite bezüglich üblicherweise verwendeten Frequenzpaaren erhöht werden kann. Die beschriebene, kompakte Transceiver-Architektur ist für eine Integration mit hoher Dichte geeignet, so daß die Mobilfunk-Handgeräte nochmals verkleinert werden können.

Mit geringfügigen Änderungen der Architektur beziehungsweise der Durchlaß-Charakteristiken von Duplexer-Filter und Bandpaß-Filtern kann die beschriebene Schaltungsanordnung leicht an andere Frequenzbänder für Zeitduplex- und Frequenzduplex-Betrieb angepaßt werden, falls dies für den Einsatz der beschriebenen Anordnung in anderen Ländern erforderlich ist.

## Patentansprüche

1. Sende- und Empfangseinheit mit
- einer Frequenzweiche (DUP), an die ein Zwischenpfad (Tx) und ein erster Empfangspfad (Rx) angeschlossen sind,
- einem Schalter (SW), der an den Zwischenpfad (Tx) angeschlossen ist, und mit dem der Zwischenpfad (Tx) zwischen einem Sendepfad (TDDTx, FDDTx) und einen zweiten Empfangspfad (TDDRx) umschaltbar ist,
- einem ersten Verstärker (LNA1), der an den ersten Empfangspfad (Rx) angeschlossen ist, und
- einem zweiten Verstärker (LNA2), der an den zweiten Empfangspfad (TDDRx) angeschlossen ist.

2. Sende- und Empfangseinheit nach Anspruch 1,
**dadurch gekennzeichnet, daß**
an die Frequenzweiche (DUP) eine Antenne (ANT) angeschlossen ist.

3. Sende- und Empfangseinheit nach Anspruch 1 oder 2,
**dadurch gekennzeichnet, daß**
die Sende- und Empfangseinheit ein UMTS-Transceiver ist.

4. Sende- und Empfangseinheit nach einem der Ansprüche 1 bis 3,
**dadurch gekennzeichnet, daß**
an den Sendepfad (TDDTx, FDDTx) ein Leistungsverstärker (PA) angeschlossen ist.

5. Sende- und Empfangseinheit nach einem der Ansprüche 1 bis 4,
**dadurch gekennzeichnet, daß**
die Frequenzweiche (DUP) ein Sendefilter und ein Empfangsfilter aufweist, und daß das Sendefilter einen Durchlaßbereich hat, der die TDD-Bänder und das FDD-Sendeband umfaßt, und daß das Empfangsfilter das FDD-Empfangsband umfaßt.

6. Sende- und Empfangseinheit nach Anspruch 3 und 5,
**dadurch gekennzeichnet, daß**
das Sendefilter einen Durchlaß-Frequenzbereich von 1900 bis 2025 Megahertz hat, und daß das Empfangsfilter einen Durchlaß-Frequenzbereich von 2110 bis 2170 Megahertz hat.

7. Sende- und Empfangseinheit nach einem der Ansprüche 1 bis 6,
**dadurch gekennzeichnet, daß**
der erste und zweite Verstärker (LNA1, LNA2) rauscharme Vorverstärker sind.
